# EUROPEAN PATENT APPLICATION

(11) **EP 3 944 075 A1**
(43) Date of publication of application: **26.01.2022**
(21) Application number: 20186851.0
(22) Date of filing: 21.07.2020
(51) Int. Cl.: G06F 8/658, G06F 11/36, G06F 8/71

(54) **A METHOD FOR OPERATING A DEVELOPMENT SYSTEM**

(71) Applicant: VOLKSWAGEN AG, 38440 Wolfsburg (DE)
(72) Inventor: COENEN, Harm, 5835 CA Beugen (NL); VIGNESHWARAN, Chandrasekaran, 44629 Herne (DE); SPLIEHOFF, Philipp, 44147 Dortmund (DE); SCHIDLEWSKI, Ralf, 45768 Marl (DE); KOCH, Damir, 45739 Oer-Erkenschwick (DE)

(57) **Abstract**

The invention provides a method for operating a development system (100) for developing different software applications, especially for a plurality of vehicles having different feature sets and/or different hardware sets,
comprising the following steps:
1) providing a software repository (11) on a repository server (10), wherein the software repository (11) comprises source code files for at least one of the different software applications from at least one source code provider (101),
2) checking out the software repository (11) by a converting tool (20) in order to provide an artifact repository (21) at a first time (t1) prior to a start of a build, wherein the converting tool (20) serves for checking out the source code files into artifacts, and wherein the artifact repository (21) serves for archiving the artifacts checked out from the software repository (11),
3) providing at least one update (12) of the software repository (11) by the at least one source code provider (101),
4) checking out the at least one update (12) of the software repository (11) by the converting tool (20) in order to complete the artifact repository (21) at a second time (t2),
5) transmitting a completed artifact repository (21) to a build tool (30) in order to provide the build of an updated software repository (11).

## Description

The invention relates to a method for operating a development system for developing different software applications, especially for a plurality of vehicles having different feature sets and/or different hardware sets, according to the independent method claim. Further, the invention relates to a computer program product for a corresponding method according to the independent product claim. Moreover, the invention relates to a corresponding development system for developing different software applications, especially for a plurality of vehicles having different feature sets and/or different hardware sets, according to the independent system claim.

In software development build processes are basically known. The builds include processes of converting source code files provided by different source code providers into standalone software artifacts, for example binary files. Builds will usually be executed regularly, for example at night, when it is assumed that source code providers do not work on source code files. During such builds, the software artifacts can be tested and merged together to ready software versions. The source code files are usually stored in software repositories. Especially for vehicles having different feature sets and/or different hardware sets, the size of software repositories is often very big, usually over 200 GB. Therefore, the builds for such software repositories take a significant amount of time.

The aim of the present invention is to provide a method for operating a development system for developing different software applications, especially for a plurality of vehicles having different feature sets and/or different hardware sets, which has improved efficiency even for big software repositories at about 200 GB or more storage size. It is especially the aim of the present invention to provide a method for operating a development system for developing different software applications, especially for a plurality of vehicles having different feature sets and/or different hardware sets, that allows flexible and/or fast build processes for big software repositories. Also, the aim of the invention is to provide a corresponding computer program product for the inventive method as well as an improved development system for executing a corresponding method.

According to a first aspect, embodiments of the invention provide a method for operating a development system for developing different software applications, especially for a plurality of vehicles having different feature sets and/or different hardware sets, with the features of the independent method claim. According to a second aspect, embodiments of the invention provide a computer program product for a corresponding method with the features of the independent product claim. According to a third aspect, the invention provides a corresponding development system for developing different software applications, especially for a plurality of vehicles having different feature sets and/or different hardware sets, with the features of the independent system claim.

According to the first aspect, embodiments of the invention provide a method for operating a development system for developing different software applications, especially for a plurality of vehicles having different feature sets and/or different hardware sets, preferably during executing of builds, comprising the following steps:
1) providing a software repository on a repository server, wherein the software repository comprises source code files for at least one of the different software applications from at least one source code provider,
2) checking out the software repository by a converting tool in order to provide an artifact repository at a first time prior to a start of a build, wherein the converting tool serves for checking out the source code files into artifacts, and wherein the artifact repository serves for archiving the artifacts checked out from the software repository,
3) providing at least one update of the software repository by the at least one source code provider,
4) checking out of the at least one update of the software repository by the converting tool in order to complete the artifact repository at a second time,
5) transmitting a completed artifact repository to a build tool in order to provide the build of an updated software repository.

Preferably, the method steps may be carried out in the given order or in an at least partly modified order, and/or the method steps may be carried out at least partly simultaneously and/or successively, and/or the method steps according to the invention can be carried out repeatedly. In some embodiments the steps 3) and 4) may be repeated more than one time, so that more than one update can be provided to the software repository and the checking out the software repository can be executed in more than two ethaphs.

The development system according to embodiments of the invention is a system for software development, including hardware and/or software components such as at least one repository server (serving also as version control tool or version management tool), at least one converting tool (that is checking out tool or, in other words, compiling and/or linking tool) and at least one build tool (serving as a build workspace or a build pipeline, including a test tool, a stage tool and/or a deploy tool). The development system may be configured as a continuous deployment system or as a continuous delivery system, for example using Jenkins architecture.

Different software applications may comprise safety, intelligence, environmental and customer friendliness as well as comfortable and enjoyable applications. A plurality of vehicles according to the invention can comprise various kinds of vehicles using different feature sets and/or different hardware sets. Thus, a plurality of vehicles according to the invention require a variety of different software applications dependent on the different feature sets and/or on the different hardware sets.

For all these software applications, source codes will be continuously updated and developed by the development system. For this aim, various source code providers (for example human developers, developer groups and/or computing units comprising artificial intelligence features) are working on source code files for corresponding software applications.

The software repository according to embodiments of the invention has to provide storage size for all these multiple software applications, for example at least 200 GB.

The idea is to check-out (compile and/or link) the (relatively large and/or arbitrarily large) software repository on all the build nodes prior to a planned start of an actual build. This can be done in moments when there is no or low activity (preferably right after the previous build-run). Often such builds will therefore be executed at night, as it is assumed that source code providers do not work on source code files at that time. Such builds may be referred to as nightly builds. The term "nightly build" throughout this specification refers to a build executed at a low activity time at the source code provider side, e.g. at night or in the weekend. When a new build starts, the main part of the software repository is already available on all the build nodes. Only an update may need to be made to a mirror workspace, which is usually a small amount of data in comparison to the size of the whole software repository. This is the delta since the last check-out moment and the new build. Once the mirror workspace, and thus the update of the software repository, is checked out to the artifact repository, a copy of the completed artifact repository can be made to the build tool and the build can start.

An advantage of embodiments of the invention is that no noticeable delay in the build occurs even for a relatively large and/or arbitrarily large software repository. Faulty builds due to network disruptions can thus be reduced or almost avoided. Thus, the network load can be reduced and virtually avoided. Therefore, checking out the software repository to the build nodes can be optimized substantially. Also, checking in to the repository server (that is version management) can be accelerated. Then, the source code providers can receive the feedback about the testing results and the actual quality of the source code files more quickly.

In some embodiments, prior to step 2), at least one method step is provided:
2a) monitoring an activity of the least one source code provider.

Thus, the moments with no or only low activity can be recognized in order to estimate an optimal first time to check-out the software repository.

Furthermore, in some embodiments, checking out the software repository in step 2) is only executed, when no activity or only small activity is detected by the least one source code provider. Thus, it can be assured that the source code provider is not disturbed by working on source code files.

In some embodiments, the first time is determined as a time lying (just) after a previous build-run, especially between 1 sec and 10 min, preferably between 10 sec and 1 min, after a previous build-run. Thus, the main part of the software repository can be checked out to the artifact repository at a preferable moment, when the main part of the software repository is already available on all the build nodes.

Besides this, in some embodiments, after step 2), at least one method step is provided:
2b) providing the artifact repository locally on the repository server, especially in a build workspace of the repository server, or remotely on at least one backend device, especially in a cloud.

Providing the artifact repository locally on the repository server can be advantageous to provide a self-contained build tool. Providing the artifact repository remotely on at least one backend device can be advantageous to provide arbitrary large artifact repository and to keep the artifacts for an extended period of time.

Another advantage of embodiments of the invention that may be achieved is that the at least one update of the software repository in step 3) is provided via a mirror workspace of the repository server. Thus, the delta between the last build and the new build can easily be determined to provide the at least one update of the software repository for completing the artifact repository for the new build.

In some embodiments, the build tool is provided locally on the repository server or remotely on at least one backend device, especially in a cloud. Thus, the build toll can be flexibly provided.

Furthermore, in some embodiments, a connection line is provided between the build tool and the artifact repository to facilitate at least one of archive, download, tag, list, combine and/or delete artifacts from the artifact repository. In this way, the functional connection can be achieved between the build tool and the artifact repository.

Moreover, embodiments of the invention may provide that in step 1) the software repository is provided as a repository server mounted in build nodes, so that checking out in steps 2) and/or 4) is provided by copying the software repository and/or the at least one update of the software repository to the artifact repository. Thus, a copy of the raw repository data to the mirror workspace can already provide a ready artifact repository. In this way, time can be saved by build since the mount point is a faster connection.

Some embodiments of the invention comprise at least the following step:
6) performing at least one test on the build by a test tool to deploy at least one portion of the build corresponding to at least one source code file concerning to at least one software application. Through testing the software, the source code file can be retrieved having the best quality for check in into the software repository.

Further, some embodiments of the invention comprise at least one of the following steps:
7) testing a version of the at least one of the different software applications by a deployment tool on at least one test vehicle, and/or
8) installing a version of the at least one of the different software applications by a deployment tool on at least one user vehicle.

With the help of step 7) a new version of the at least one software application can be delivered when a certain quality metric is reached. With the help of step 8) the at least one software application can go into the production fully automated.

According to the second aspect, embodiments of the invention provide a computer program product comprising a program code for carrying out a method as described above. The computer program product comprises instructions which, when the program is executed by a computer, cause the computer to carry out a method as described above. With the help of the inventive computer program product the same advantages can be achieved as with the help of the inventive method described above. Full reference is made to these advantages in the present case.

According to the third aspect, embodiments of the invention provide a development system configured for executing a method as described above. With the help of the development system, the same advantages can be achieved as with the help of the inventive method described above. Full reference is made to these advantages in the present case.

Embodiments of the invention and its further developments, as well as its advantages, will be explained in more detail below using figures. The figures show schematically:

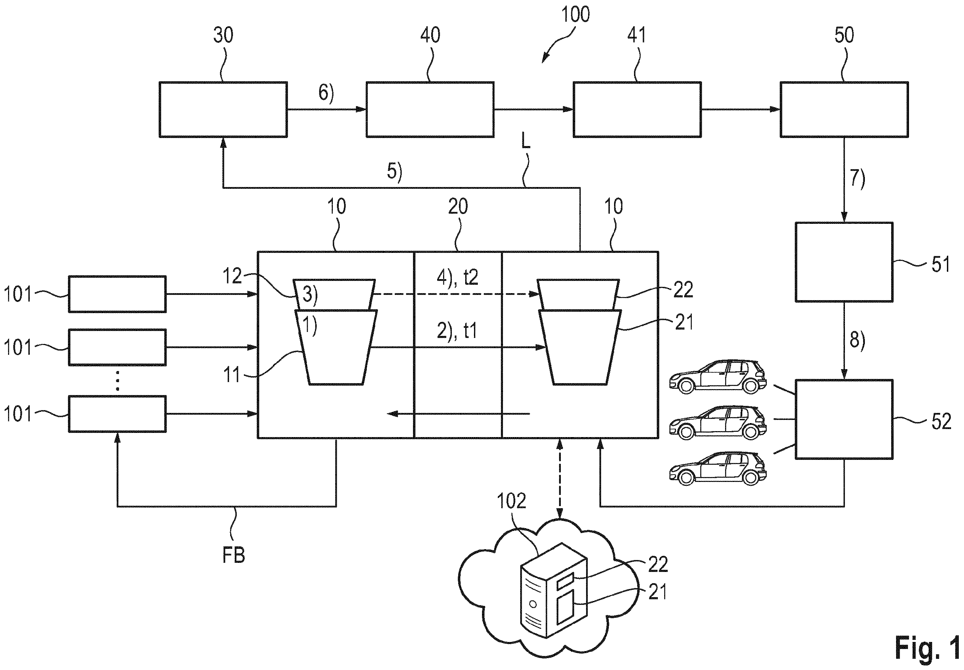

Fig. 1 a schematic view of a development system within the meaning of the invention.

Figure 1 shows a schematic development system 100 within the meaning of the invention for developing different software applications, especially for a plurality of vehicles having different feature sets and/or different hardware sets, preferably during executing of builds. The development system 100 is constructed for executing an inventive method for operating such a development system 100,
comprising the following steps:
1) providing a software repository 11 on a repository server 10, wherein the software repository 11 comprises source code files for at least one of the different software applications from at least one source code provider 101,
2) checking out the software repository 11 by a converting tool 20 in order to provide an artifact repository 21 at a first time t1 prior to a start of a build, wherein the converting tool 20 serves for checking out the source code files into artifacts, and wherein the artifact repository 21 serves for archiving the artifacts checked out from the software repository 11,
3) providing at least one update 12 of the software repository 11 by the at least one source code provider 101,
4) checking out of the at least one update 12 of the software repository 11 by the converting tool 20 in order to complete the artifact repository 21 at a second time t2,
5) transmitting a completed artifact repository 21 to a build tool 30 in order to provide the build of an updated software repository 11.

Preferably, the method steps according to the invention can be carried out repeatedly to provide continuous updating of the software repository 11 and an automatic versioning of the software repository 11. The method steps according to the invention can be carried out at least partly simultaneously and/or successively.

The development system 100 according to the invention is constructed as a system for software development. It may include hardware and/or software components. The development system 100 comprises at least one repository server 10 serving also as version management tool for the software repository 11.

The converting tool 20 serves for checking out or (that is compiling and/or linking) source code files provided by the software repository 11.

The build tool 30 serves as a build workspace or a build pipeline, including a test tool 40, a stage tool 41, a deploy tool 50 and so on. The development system can be configured as a continuous deployment system or as a continuous delivery system, for example using Jenkins architecture.

Tested and merged artifacts will be transmitted to the artifact repository 21 after the build-run is completed. From the artifact repository 21 tested and merged artifacts can be checked in to the software repository 11 on the repository server 10 to provide a version of the at least one software application.

Different software applications can comprise safety, intelligence, environmental and customer friendliness as well as comfortable and enjoyable applications in vehicles provided with different feature sets and/or different hardware sets. Thus, the software repository 11 must provide sufficient storage space for all these multiple software applications, for example at least 200 GB.

Embodiments of the invention suggest to check-out (compile and/or link) the (relatively huge and/or arbitrarily large) software repository 11 on all the build nodes prior to a planned start of an actually build at the second time t2. The first time t1 can be defined as a moment, when there is no or low activity (preferably right after the previous build-run). In step 2a) the invention can stipulate a monitoring of the activity of the least one source code provider. When no or low activity is detected, the software repository 11 can be checked out on all the build nodes prior to the planned start of an actual build at the second time t2.

When a new build starts at the second time t2, the software repository 11 is already available on all the build nodes. Only an update 12 can be made to a mirror workspace, which is usually a small amount of data in comparison to the size of the software repository 11. This is the delta 22 for the artifact repository 21 between a last check-out moment and the new build at the second time t2. Once the mirror workspace is checked out to the artifact repository 21, a copy of the completed artifact repository 21 can be made to the build tool 30 and the build can start.

Advantageously no noticeable delay in the build occurs during builds of the software repository 11. Also, the source code providers 101 can receive the feedback FB faster about the testing results and the actual quality of the source code files.

Further, prior to step 2) at least one method step may be provided:
2a) monitoring an activity of the least one source code provider (101).

Thus, the moments with no or only low activity can be recognized in order to estimate an optimal first time to check-out the software repository.

The first time t1 can be determined as a time lying just after a previous build-run, for example between 1 sec and 10 min, preferably between 10 sec and 1 min, after a previous build was executed.

In some embodiments, after step 2), at least one method step may be provided:
2b) providing the artifact repository 21 locally on the repository server 10, for example in a build workspace (that is within the build toll 30) of the repository server 10, or remotely on at least one backend device 102, for example in a cloud.

The build tool 30 can also be provided locally on the repository server 10 or remotely on at least one backend device 102, for example in a cloud.

A special connection line L can be provided between the build tool 30 and the artifact repository 21 to facilitate activities such as archive, download, tag, list, combine and/or delete artifacts from the artifact repository 21.

Within the scope of the invention it is possible that in step 1) the software repository 11 is provided as a repository server mounted in build nodes, so that checking out in steps 2) and/or 4) is provided by simple copy processes.

Advantageously the method may comprise at least the following step:
6) performing at least one test on a build of the software repository 11 by a test tool 40 to deploy a version of the at least one of the different software applications.

Furthermore the method may comprise at least one of the following steps:
7) testing a version of the at least one of the different software applications by a deployment tool 50 on at least one test vehicle 51, and/or
8) installing a version of the at least one of the different software applications by a deployment tool 50 on at least one user vehicle 52,
in order to provide a new version of the at least one software application or to allow the at least one software application to go into the production automatically.

In the embodiments described above the build may be a nightly build.

The above description of the figures describes the present invention only in the context of examples. Of course, individual features of the embodiments can be combined with each other, provided it is technically reasonable, without leaving the scope of the invention.

### Reference signs

- 100: development system

- 10: repository server
- 11: software repository
- 12: update

- 20: converting
- 21: artifact repository
- 22: delta

- 30: build tool

- 40: test tool
- 41: stage tool

- 50: deploy tool
- 51: test vehicle
- 52: user vehicle

- 101: source code provider
- 102: backend device

- FB: feedback

## Claims

1. A method for operating a development system (100) for developing different software applications, especially for a plurality of vehicles having different feature sets and/or different hardware sets,
comprising the following steps:
1) providing a software repository (11) on a repository server (10), wherein the software repository (11) comprises source code files for at least one of the different software applications from at least one source code provider (101),
2) checking out the software repository (11) by a converting tool (20) in order to provide an artifact repository (21) at a first time (t1) prior to a start of a build, wherein the converting tool (20) serves for checking out the source code files into artifacts, and wherein the artifact repository (21) serves for archiving the artifacts checked out from the software repository (11),
3) providing at least one update (12) of the software repository (11) by the at least one source code provider (101),
4) checking out the at least one update (12) of the software repository (11) by the converting tool (20) in order to complete the artifact repository (21) at a second time (t2),
5) transmitting a completed artifact repository (21) to a build tool (30) in order to provide the build of an updated software repository (11).

2. The method according to claim 1,
**characterized in that**
prior to step 2) at least one method step is provided:
2a) monitoring an activity of the least one source code provider (101).

3. The method according to claim 1 or 2,
**characterized in that**
checking out the software repository (11) in step 2) is only executed, when no activity or only small activity is detected by the least one source code provider (101).

4. The method according to one of the preceding claims,
**characterized in that**
the first time (t1) is determined as a time lying after a previous build-run, especially between 1 sec and 10 min, preferably between 10 sec and 1 min, after a previous build-run.

5. The method according to one of the preceding claims,
**characterized in that**
after step 2) at least one method step is provided:
2b) providing the artifact repository (21)
locally on the repository server (10), especially in a build workspace of the repository server (10),
or remotely on at least one backend device (102), especially in a cloud.

6. The method according to one of the preceding claims,
**characterized in that**
the at least one update (12) of the software repository (11) in step 3) is provided via a mirror workspace of the repository server (10).

7. The method according to one of the preceding claims,
**characterized in that**
the build tool (30) is provided locally on the repository server (10) or remotely on at least one backend device (102), especially in a cloud.

8. The method according to one of the preceding claims,
**characterized in that**
a connection line (L) is provided between the build tool (30) and the artifact repository (21) to archive, download, tag, list, combine and/or delete artifacts from the artifact repository (21).

9. The method according to one of the preceding claims,
**characterized in that**
in step 1) the software repository (11) is provided as a repository server mounted in build nodes, so that checking out in steps 2) and/or 4) is provided by copying the software repository (11) and/or the at least one update (12) of the software repository (11) to the artifact repository (21).

10. The method according to one of the preceding claims,
**characterized in that**
the method comprises at least the following step:
6) performing at least one test on the build by a test tool (40) to deploy a version of at least one software application.

11. The method according to one of the preceding claims,
**characterized in that**
the method comprises at least one of the following steps:
7) testing a version of the at least one of the different software applications by a deployment tool (50) on at least one test vehicle (51), and/or
8) installing a version of the at least one of the different software applications by a deployment tool (50) on at least one user vehicle (52).

12. The method according to one of the preceding claims,
**characterized in that**
the method steps are carried out in the given order or in an at least partly modified order, and/or the method steps are carried out at least partly simultaneously and/or successively,
and/or the method steps are carried out repeatedly.

13. A computer program product comprising instructions which, when the program is executed by a computer, cause the computer to carry out a method according to any one of the preceding claims.

14. A development system (100) configured for executing a method according to one of the preceding claims.

15. The development system (100) according to the preceding claim,
**characterized in that**
the development system (100) is configured as a continuous deployment system or as a continuous delivery system.
